# EUROPEAN PATENT APPLICATION

(11) **EP 4 815 546 A1**
(43) Date of publication of application: **30.09.2026**
(21) Application number: 23959368.4
(22) Date of filing: 27.12.2023
(51) Int. Cl.: H04W 24/08

(54) **END-OF-LINE TESTING SYSTEM AND METHOD FOR WIRELESS COMMUNICATION COLLECTION APPARATUSES**

(30) Priority: 22.11.2023 CN 202311574613
(71) Applicant: Sungiant Automotive Electronics Co., Ltd., Shenzhen, Guangdong 518101 (CN)
(72) Inventor: XU, Tonghui, Shenzhen, Guangdong 518107 (CN); CHEN, Binbin, Shenzhen, Guangdong 518107 (CN)
(74) Representative: Metida
(86) International application number: PCT/CN2023/142191
(87) International publication number: WO 2025/107401

(57) **Abstract**

Provided are an end-of-line (EOL) test system and method for wireless communication acquisition apparatuses. The system includes a host computer, a wireless communication adapter box, and a plurality of to-be-tested wireless communication acquisition apparatuses. The host computer is configured to send an acquisition apparatus power supply instruction and a test instruction to the wireless communication adapter box based on a preset wireless networking strategy. The wireless communication adapter box is configured to control a power-on sequence of the to-be-tested wireless communication acquisition apparatuses based on the acquisition apparatus power supply instruction; and after networking with all of the to-be-tested wireless communication acquisition apparatuses, complete EOL testing of all of the to-be-tested wireless communication acquisition apparatuses based on the test instruction. The to-be-tested wireless communication acquisition apparatus is configured to: after being powered on, broadcast a wireless networking request to network with the wireless communication adapter box; and after completing networking, perform EOL testing based on preset test logic and the test instruction received by the wireless communication adapter box. The present application can effectively improve networking efficiency of the wireless communication acquisition apparatuses and ensure EOL testing universality and flexibility.

## Description

The present application claims priority to Chinese Patent Application No. 202311574613.1, filed with the China National Intellectual Property Administration (CNIPA) on November 22, 2023 and entitled "END-OF-LINE (EOL) TEST SYSTEM AND METHOD FOR WIRELESS COMMUNICATION ACQUISITION APPARATUSES", all of which are incorporated herein by reference in their entireties.

### TECHNICAL FIELD

The present application relates to the technical field of wireless communication-based battery management, and in particular, to an end-of-line (EOL) test system and method for wireless communication acquisition apparatuses.

### BACKGROUND

A power battery communication acquisition apparatus acquires battery and mainboard operation data, and is connected to a battery management system. The apparatus provides real-time and reliable data support for effective management of the battery management system. It is also a key communication device to ensure normal operation of a power battery. The apparatus can be put into use only after reliable EOL testing is completed.

Currently, EOL testing is performed on the power battery communication acquisition apparatus mainly in a wired manner. Specifically, the apparatus is connected to the power battery through a harness for testing. However, when the power battery is placed on a conveying device of a production line for circulation, the harness hinders the circulation, and it is highly likely that the harness disconnects or becomes obstructed. This significantly reduces versatility and flexibility of an EOL test line, resulting in a safety problem. For a wired testing technology, although an improvement is made based on wireless communication, a current wireless communication-based test method suffers from slow and inefficient networking between a wireless communication acquisition apparatus and a corresponding monitoring apparatus, leading to low testing efficiency for the wireless communication acquisition apparatus. This severely affects EOL testing efficiency and fails to meet an actual application requirement of EOL testing.

### SUMMARY

An objective of the present application is to provide an EOL test system for wireless communication acquisition apparatuses, to resolve the following application defects of existing wireless communication acquisition apparatuses: inefficient networking and poor testing universality and flexibility. This effectively improves networking efficiency of wireless communication acquisition apparatuses, and ensures EOL testing universality and flexibility, to avoid a safety problem, improve EOL testing efficiency, and truly meet an actual application requirement of EOL testing.

To achieve the foregoing objective, it is necessary to provide an EOL test system and method for wireless communication acquisition apparatuses to resolve the foregoing technical problems.

According to a first aspect, an embodiment of the present application provides an EOL test system for wireless communication acquisition apparatuses, including a host computer, a wireless communication adapter box, and a plurality of to-be-tested wireless communication acquisition apparatuses.

The host computer is configured to send an acquisition apparatus power supply instruction and a test instruction to the wireless communication adapter box based on a preset wireless networking strategy and preset test logic.

The wireless communication adapter box is configured to control a power-on sequence of the to-be-tested wireless communication acquisition apparatuses based on the acquisition apparatus power supply instruction; and after networking with all of the to-be-tested wireless communication acquisition apparatuses, control the to-be-tested wireless communication acquisition apparatuses to complete EOL testing of all of the to-be-tested wireless communication acquisition apparatuses based on the test instruction.

The to-be-tested wireless communication acquisition apparatus is configured to: after being powered on, broadcast a wireless networking request to network with the wireless communication adapter box; and after completing networking, perform EOL testing based on the preset test logic and the test instruction received by the wireless communication adapter box.

Further, the preset test logic includes voltage acquisition accuracy test logic, temperature acquisition accuracy test logic, balancing function test logic, and single-cell acquisition channel leakage current test logic.

Further, the wireless communication adapter box includes a controller area network (CAN) communication conversion unit, a main chip control unit, a power switch matrix unit, a wireless communication transceiver unit, and a system power management unit.

The CAN communication conversion unit is configured to implement communication interaction between the host computer and the main chip control unit, and receive the acquisition apparatus power supply instruction and the test instruction that are sent by the host computer.

The main chip control unit is configured to determine a current to-be-networked wireless communication acquisition apparatus based on the acquisition apparatus power supply instruction, generate a corresponding control instruction, and send the control instruction to the power switch matrix unit; and is further configured to complete wireless networking with the current to-be-networked wireless communication acquisition apparatus based on a preset networking procedure and a wireless networking request broadcast by the current to-be-networked wireless communication acquisition apparatus.

The power switch matrix unit is configured to perform a power supply operation on the current to-be-networked wireless communication acquisition apparatus based on the control instruction from the main chip control unit.

The wireless communication transceiver unit is configured to perform wireless data transceiving for wireless networking and information interaction between the wireless communication adapter box and each of the to-be-tested wireless communication acquisition apparatuses.

The system power management unit is configured to supply power to the CAN communication conversion unit, the main chip control unit, the power switch matrix unit, and the wireless communication transceiver unit.

Further, the wireless communication adapter box is further configured to: after the wireless communication adapter box establishes wireless networking with the current to-be-networked wireless communication acquisition apparatus, set a networking flag corresponding to the current to-be-networked wireless communication acquisition apparatus to networking success, generate corresponding networking success information based on the networking flag, and send the networking success information to the host computer. The networking success information includes the networking flag and media access control (MAC) address information of the current to-be-networked wireless communication acquisition apparatus.

The host computer is further configured to determine, based on the networking success information and the preset wireless networking strategy, whether all of the to-be-tested wireless communication acquisition apparatuses have completed networking; and after determining that the networking has not been completed, send a next acquisition apparatus power supply instruction to the wireless communication adapter box based on the preset networking strategy.

Further, the wireless communication adapter box is further configured to: in response to the power supply operation on the current to-be-networked wireless communication acquisition apparatus, start a networking request monitoring timer; and in response to that the networking request monitoring timer expires and no wireless networking request is received, perform a power-off operation on the current to-be-networked wireless communication acquisition apparatus, set a networking flag corresponding to the current to-be-networked wireless communication acquisition apparatus to networking anomaly, generate corresponding networking failure information, and send the networking failure information to the host computer. The networking failure information includes the networking flag.

The host computer is further configured to update a corresponding apparatus networking failure count based on the networking failure information; determine whether an updated apparatus networking failure count exceeds a preset failure upper limit; and after determining that the updated apparatus networking failure count does not exceed the preset failure upper limit, resend the corresponding acquisition apparatus power supply instruction to the wireless communication adapter box.

According to a second aspect, an embodiment of the present application provides an EOL test method for wireless communication acquisition apparatuses, applied to the foregoing EOL test system for wireless communication acquisition apparatuses and including the following steps:
sending, by a host computer, an acquisition apparatus power supply instruction to a wireless communication adapter box based on a preset wireless networking strategy in response to establishment of communication between the host computer and the wireless communication adapter box, where the acquisition apparatus power supply instruction includes a single identifier of a to-be-tested wireless communication acquisition apparatus;
determining, by the wireless communication adapter box, a current to-be-networked wireless communication acquisition apparatus based on the acquisition apparatus power supply instruction, and performing a power supply operation on the current to-be-networked wireless communication acquisition apparatus;
after the current to-be-networked wireless communication acquisition apparatus is powered on, broadcasting, by the current to-be-networked wireless communication acquisition apparatus, a wireless networking request, where the wireless networking request includes MAC address information of the current to-be-networked wireless communication acquisition apparatus;
completing, by the wireless communication adapter box, wireless networking with the current to-be-networked wireless communication acquisition apparatus based on the wireless networking request and a preset networking procedure; and
after all to-be-tested wireless communication acquisition apparatuses complete networking, sending, by the host computer, a test instruction to the wireless communication adapter box based on preset test logic, to start EOL testing for each of the to-be-tested wireless communication acquisition apparatuses.

Further, the determining, by the wireless communication adapter box, a current to-be-networked wireless communication acquisition apparatus, and performing a power supply operation on the current to-be-networked wireless communication acquisition apparatus includes:
determining, by a main chip control unit of the wireless communication adapter box, the current to-be-networked wireless communication acquisition apparatus based on the acquisition apparatus power supply instruction, generating a corresponding control instruction, and sending the control instruction to a power switch matrix unit of the wireless communication adapter box; and
performing, by the power switch matrix unit, the power supply operation on the current to-be-networked wireless communication acquisition apparatus based on the control instruction.

Further, the completing, by the wireless communication adapter box, wireless networking with the current to-be-networked wireless communication acquisition apparatus based on the wireless networking request and a preset networking procedure includes:
completing, by the main chip control unit of the wireless communication adapter box, wireless networking with the current to-be-networked wireless communication acquisition apparatus based on the wireless networking request and the preset networking procedure.

Further, after the completing, by the main chip control unit of the wireless communication adapter box, wireless networking with the current to-be-networked wireless communication acquisition apparatus, the method further includes:
setting, by the wireless communication adapter box, a networking flag corresponding to the current to-be-networked wireless communication acquisition apparatus to networking success, generating corresponding networking success information based on the networking flag, and sending the networking success information to the host computer, where the networking success information includes the networking flag and the MAC address information of the current to-be-networked wireless communication acquisition apparatus; and
determining, by the host computer based on the networking success information and the preset wireless networking strategy, whether all of the to-be-tested wireless communication acquisition apparatuses have completed networking; and after determining that the networking has not been completed, sending a next acquisition apparatus power supply instruction to the wireless communication adapter box based on the preset networking strategy.

Further, the method further includes:
in response to that the power switch matrix unit of the wireless communication adapter box supplies power to the current to-be-networked wireless communication acquisition apparatus, starting a networking request monitoring timer;
in response to that the networking request monitoring timer expires and the wireless communication adapter box receives no wireless networking request, performing, by the power switch matrix unit of the wireless communication adapter box, a power-off operation on the current to-be-networked wireless communication acquisition apparatus, setting a networking flag corresponding to the current to-be-networked wireless communication acquisition apparatus to networking anomaly, generating corresponding networking failure information, and sending the networking failure information to the host computer, where the networking failure information includes the networking flag; and
updating, by the host computer, a corresponding apparatus networking failure count based on the networking failure information; determining whether an updated apparatus networking failure count exceeds a preset failure upper limit; and after determining that the updated apparatus networking failure count does not exceed the preset failure upper limit, resending the corresponding acquisition apparatus power supply instruction to the wireless communication adapter box.

The present application provides the EOL test system and method for wireless communication acquisition apparatuses, which implement the following technical solution: The host computer sends the acquisition apparatus power supply instruction and the test instruction to the wireless communication adapter box based on the preset wireless networking strategy. The wireless communication adapter box controls the power-on sequence of the to-be-tested wireless communication acquisition apparatuses based on the acquisition apparatus power supply instruction. After the to-be-tested wireless communication acquisition apparatus is powered on, the to-be-tested wireless communication acquisition apparatus broadcasts the wireless networking request to network with the wireless communication adapter box. After networking is completed, the wireless communication adapter box controls the to-be-tested wireless communication acquisition apparatuses to complete EOL testing of all of the to-be-tested wireless communication acquisition apparatuses based on the preset test logic and the test instruction sent by the host computer. In comparison with the prior art, the EOL test system for wireless communication acquisition apparatuses can effectively improve networking efficiency of the wireless communication acquisition apparatuses during EOL testing, and reliably ensure testing efficiency and product quality of the wireless communication acquisition apparatuses. It can also ensure EOL testing universality and flexibility, to avoid a safety problem and improve EOL testing efficiency. In this way, an actual application requirement of EOL testing is truly met.

### BRIEF DESCRIPTION OF THE DRAWINGS

FIG. 1 is a schematic structural diagram of an EOL test system for wireless communication acquisition apparatuses according to an embodiment of the present application;
FIG. 2 is a schematic structural diagram of a wireless communication adapter box in an EOL test system for wireless communication acquisition apparatuses according to an embodiment of the present application;
FIG. 3 is a schematic flowchart of an EOL test method for wireless communication acquisition apparatuses according to an embodiment of the present application; and
FIG. 4 is a diagram of an internal structure of a computer device according to an embodiment of the present application.

### DETAILED DESCRIPTION

To make the objectives, technical solutions, and beneficial effects of the present application clearer, the following further describes the present application in detail with reference to the accompanying drawings and embodiments. Apparently, the embodiments described below are some of the embodiments of the present application, and are merely used to illustrate the present application, rather than to limit the scope of the present application. All other embodiments obtained by those of ordinary skill in the art based on the embodiments of the present application without creative efforts should fall within the protection scope of the present application.

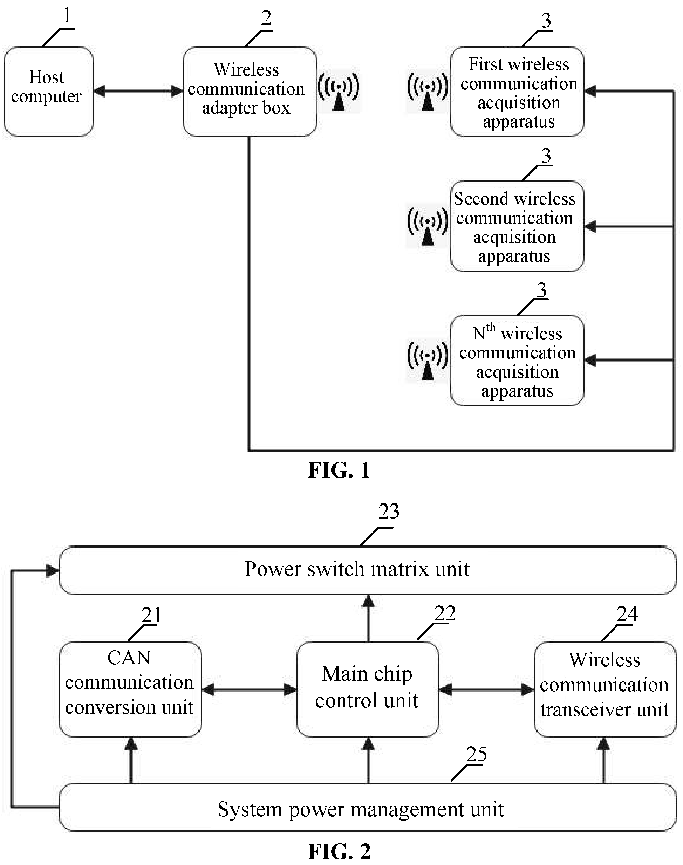

In an embodiment, as shown in FIG. 1, an EOL test system for wireless communication acquisition apparatuses is provided. The system includes a host computer 1, a wireless communication adapter box 2, and a plurality of to-be-tested wireless communication acquisition apparatuses 3. The host computer 1 communicates with the wireless communication adapter box 2. The wireless communication adapter box 2 communicates with the plurality of to-be-tested wireless communication acquisition apparatuses 3 based on wireless networking. A specific quantity of the to-be-tested wireless communication acquisition apparatuses may be selected based on a production requirement, and is not specifically limited herein.

The host computer 1 is configured to send an acquisition apparatus power supply instruction and a test instruction to the wireless communication adapter box 2 based on a preset wireless networking strategy and preset test logic. The preset wireless networking strategy may be understood as including a networking sequence (power-on sequence) of the to-be-tested wireless communication acquisition apparatuses 3, timeout duration of a networking request monitoring timer, a preset failure upper limit (maximum allowable quantity of networking failures), and another relevant networking parameter that are preset based on a test requirement. Relevant configuration needs to be completed on the host computer 1 in advance. A specific configuration manner and selected values of relevant parameters are not specifically limited herein. Correspondingly, the acquisition apparatus power supply instruction includes a single identifier of a to-be-tested wireless communication acquisition apparatus. The single identifier of the to-be-tested wireless communication acquisition apparatus is used to indicate a to-be-tested wireless communication acquisition apparatus that the system currently allows the wireless communication adapter box to power on and network with. This may be understood as that the host computer 1 ensures, through the acquisition apparatus power supply instruction based on the preset wireless networking strategy, that only one to-be-tested wireless communication acquisition apparatus serves as a current to-be-networked wireless communication acquisition apparatus in each round of networking of the system. This prevents excessive processing for the wireless communication adapter box to sense each wireless communication acquisition apparatus when simultaneously networking with a plurality of wireless communication acquisition apparatuses, to improve networking efficiency.

The preset test logic may be understood as function or performance test execution logic formulated based on an actual test requirement, specifically including voltage acquisition accuracy test logic, temperature acquisition accuracy test logic, balancing function test logic, single-cell acquisition channel leakage current test logic, and the like. Logic may be added or removed based on adjustment to test content in an actual scenario.

In practical application, after the host computer establishes a communication connection to the wireless communication adapter box and a required test environment is deployed, the preset wireless networking strategy, the preset test logic, and another relevant parameter can be configured on the host computer, and an automatic test process including the following two stages can be started: automatic networking and test logic execution.

The wireless communication adapter box 2 is configured to control the power-on sequence of the to-be-tested wireless communication acquisition apparatuses 3 based on the acquisition apparatus power supply instruction; and after networking with all of the to-be-tested wireless communication acquisition apparatuses, control the to-be-tested wireless communication acquisition apparatuses to complete EOL testing of all of the to-be-tested wireless communication acquisition apparatuses 3 based on the test instruction.

In principle, a design of the wireless communication adapter box 2 only needs to fulfill the foregoing functions. However, to ensure efficient and reliable communication networking based on a simple and low-cost structural configuration, in this embodiment, preferably, the wireless communication adapter box 2 is implemented through a system architecture shown in FIG. 2. Specifically, the wireless communication adapter box 2 includes a CAN communication conversion unit 21, a main chip control unit 22, a power switch matrix unit 23, a wireless communication transceiver unit 24, and a system power management unit 25.

The CAN communication conversion unit 21 is configured to implement communication interaction between the host computer 1 and the main chip control unit 22, and receive the acquisition apparatus power supply instruction and the test instruction that are sent by the host computer 1. Specifically, the CAN communication conversion unit 21 is responsible for communication between the host computer and the main chip control unit in the wireless communication adapter box, transceiving of relevant information, and logic control processing.

The main chip control unit 22 is configured to determine a current to-be-networked wireless communication acquisition apparatus based on the acquisition apparatus power supply instruction, generate a corresponding control instruction, and send the control instruction to the power switch matrix unit 23; and is further configured to complete wireless networking with the current to-be-networked wireless communication acquisition apparatus based on a preset networking procedure and a wireless networking request broadcast by the current to-be-networked wireless communication acquisition apparatus. The preset networking procedure may be determined based on an actual application requirement, and is not specifically limited herein.

The power switch matrix unit 23 is configured to perform a power supply operation on the current to-be-networked wireless communication acquisition apparatus based on the control instruction from the main chip control unit 22. Specifically, the power switch matrix unit 23, under control of the main chip control unit 22, is responsible for controlling power supply to a specified wireless communication acquisition apparatus, and may control a power-on time of each to-be-tested wireless communication acquisition apparatus with reference to the preset wireless networking strategy for EOL testing. It should be noted that a quantity of channels of the power switch matrix unit 23 may be determined based on the quantity of the to-be-tested wireless communication acquisition apparatuses in the system, to support an application requirement for effective testing of all to-be-tested wireless communication acquisition apparatuses.

The wireless communication transceiver unit 24 is configured to perform wireless data transceiving for wireless networking and information interaction between the wireless communication adapter box 2 and each of the to-be-tested wireless communication acquisition apparatuses 3.

The system power management unit 25 is configured to supply power to the CAN communication conversion unit 21, the main chip control unit 22, the power switch matrix unit 23, and the wireless communication transceiver unit 24.

The to-be-tested wireless communication acquisition apparatus 3 is configured to: after being powered on, broadcast a wireless networking request to network with the wireless communication adapter box 2; and after completing networking, perform EOL testing based on the preset test logic and the test instruction received by the wireless communication adapter box 2. The wireless networking request includes MAC address information of the current to-be-networked wireless communication acquisition apparatus.

The foregoing networking process of the system is described by using a power-on and networking process of one to-be-tested wireless communication acquisition apparatus as an example. In practical application, individual networking processes (each round of networking of the system) of the to-be-tested wireless communication acquisition apparatuses are similar, except that single identifiers of to-be-tested wireless communication acquisition apparatuses in acquisition apparatus power supply instructions sent by the host computer 1 are different. Correspondingly, current to-be-networked wireless communication acquisition apparatuses controlled to be powered on by the wireless communication adapter box 2 through the main chip control unit 22 and the power switch matrix unit 23 are different. To ensure that all to-be-tested wireless communication acquisition apparatuses can quickly and efficiently complete networking, in this embodiment, preferably, a corresponding networking flag is set for each to-be-tested wireless communication acquisition apparatus 3 such that the host computer 1 can track and manage its networking process, to control orderly power-on and networking of all to-be-tested wireless communication acquisition apparatuses 3 in the system. In this embodiment, preferably, after the wireless communication adapter box 2 establishes wireless networking with the current to-be-networked wireless communication acquisition apparatus 3, the wireless communication adapter box 2 sets a networking success flag for it and feeds back the networking success flag to the host computer 1. Specifically, the wireless communication adapter box 2 is further configured to: after the wireless communication adapter box 2 establishes wireless networking with the current to-be-networked wireless communication acquisition apparatus, set a networking flag corresponding to the current to-be-networked wireless communication acquisition apparatus to networking success, generate corresponding networking success information based on the networking flag, and send the networking success information to the host computer 1. The networking success information includes the networking flag and the MAC address information of the current to-be-networked wireless communication acquisition apparatus.

The host computer 1 is further configured to determine, based on the networking success information and the preset wireless networking strategy, whether all of the to-be-tested wireless communication acquisition apparatuses have completed networking; and after determining that the networking has not been completed, send a next acquisition apparatus power supply instruction to the wireless communication adapter box 2 based on the preset networking strategy, until it determines that all of the to-be-tested wireless communication acquisition apparatuses 3 complete networking with the wireless communication adapter box 2.

In this embodiment, the wireless communication adapter box controls sequential power-on and networking of all to-be-tested wireless communication acquisition apparatuses in the EOL test system, and ensures that only one unnetworked to-be-tested wireless communication acquisition apparatus at a time sends a wireless networking request carrying its MAC address information. This can ensure normal networking of each to-be-tested wireless communication acquisition apparatus with the corresponding wireless communication adapter box, and effectively avoid a slow networking speed caused by system overheads and resource occupation when a plurality of to-be-tested wireless communication acquisition apparatuses simultaneously request networking, to effectively improve networking efficiency of the wireless communication acquisition apparatuses. This can also ensure EOL testing universality and flexibility based on a simple and low-cost wireless networking architecture, to avoid a safety problem and improve EOL testing efficiency.

In an actual networking scenario, an external factor such as network latency or interruption may cause a delay, loss, or the like of a wireless networking request or interaction information in a networking process. To avoid inefficient networking caused by such a factor, in this embodiment, preferably, a fault tolerance mechanism combining a time limit of a single networking process with an allowable quantity of networking times is used to ensure networking efficiency of the system while enabling each normally functioning to-be-tested wireless communication acquisition apparatus to successfully complete networking and testing as soon as possible.

Specifically, the wireless communication adapter box 2 is further configured to: in response to the power supply operation on the current to-be-networked wireless communication acquisition apparatus, start the networking request monitoring timer; and in response to that the networking request monitoring timer expires and no wireless networking request is received, perform a power-off operation on the current to-be-networked wireless communication acquisition apparatus, set a networking flag corresponding to the current to-be-networked wireless communication acquisition apparatus to networking anomaly, generate corresponding networking failure information, and send the networking failure information to the host computer. The networking failure information includes the networking flag. The timeout duration of the networking request monitoring timer may be set based on an actual application requirement, and is not specifically limited herein. For example, the timeout duration of the networking request monitoring timer is set to 1s. In response to that no corresponding networking request message is received within 1s after the power supply operation is performed on the current to-be-networked wireless communication acquisition apparatus, it is assumed by default that the current to-be-networked wireless communication acquisition apparatus is abnormal or a communication environment is abnormal, and the current to-be-networked wireless communication acquisition apparatus needs to be powered off to re-perform power-on and networking.

The host computer 1 is further configured to update a corresponding apparatus networking failure count based on the networking failure information; determine whether an updated apparatus networking failure count exceeds the preset failure upper limit; and after determining that the updated apparatus networking failure count does not exceed the preset failure upper limit, resend the corresponding acquisition apparatus power supply instruction to the wireless communication adapter box 2. The apparatus networking failure count corresponds to each to-be-tested wireless communication acquisition apparatus. In other words, a quantity of abnormal networking times is counted for each to-be-tested wireless communication acquisition apparatus. Correspondingly, the preset failure upper limit may be understood as an allowable quantity of networking failures, which is applicable to the entire system and used to control the quantity of abnormal networking times for all to-be-tested wireless communication acquisition apparatuses. It may be set based on an actual application requirement, to ensure networking efficiency of the entire system while providing as much networking opportunities as possible.

In this embodiment of the present application, the host computer sends the acquisition apparatus power supply instruction and the test instruction to the wireless communication adapter box based on the preset wireless networking strategy. The wireless communication adapter box controls the power-on sequence of the to-be-tested wireless communication acquisition apparatuses based on the acquisition apparatus power supply instruction. After the to-be-tested wireless communication acquisition apparatus is powered on, the to-be-tested wireless communication acquisition apparatus broadcasts the wireless networking request to network with the wireless communication adapter box. In response to that no wireless networking request is received within preset duration after the power supply operation is performed on the current to-be-networked wireless communication acquisition apparatus, the power-off operation is performed on the current to-be-networked wireless communication acquisition apparatus, the networking flag corresponding to the current to-be-networked wireless communication acquisition apparatus is set to networking anomaly, and the corresponding networking failure information is generated and sent to the host computer. After determining that the apparatus networking failure count does not exceed the preset failure upper limit, the host computer resends the corresponding acquisition apparatus power supply instruction to the wireless communication adapter box, until networking succeeds or the preset failure upper limit is reached. When the wireless communication adapter box establishes wireless networking with the current to-be-networked wireless communication acquisition apparatus, the networking flag corresponding to the current to-be-networked wireless communication acquisition apparatus is set to networking success, and the networking success information including the networking flag and the MAC address information of the current to-be-networked wireless communication acquisition apparatus is generated based on the networking flag and sent to the host computer. The host computer sends the next acquisition apparatus power supply instruction to the wireless communication adapter box based on the preset networking strategy, until all to-be-tested wireless communication acquisition apparatuses complete networking. Then, the host computer sends the test instruction to the wireless communication adapter box based on the preset test logic, to start EOL testing for each to-be-tested wireless communication acquisition apparatus. The foregoing technical solution effectively resolves application defects of an existing EOL test system for wireless communication acquisition apparatuses. It can effectively improve networking efficiency of the wireless communication acquisition apparatuses during EOL testing, and reliably ensure testing efficiency and product quality of the wireless communication acquisition apparatuses. It can also ensure EOL testing universality and flexibility, to avoid a safety problem and improve EOL testing efficiency. In this way, an actual application requirement of EOL testing is truly met.

It should be noted that the modules in the foregoing EOL test system for wireless communication acquisition apparatuses may be implemented in whole or in part by software, hardware, or a combination thereof. The modules may be embedded in or independent of a processor of a computer device in a form of hardware, or stored in a memory of the computer device in a form of software, such that the processor can easily invoke and execute corresponding operations of the modules.

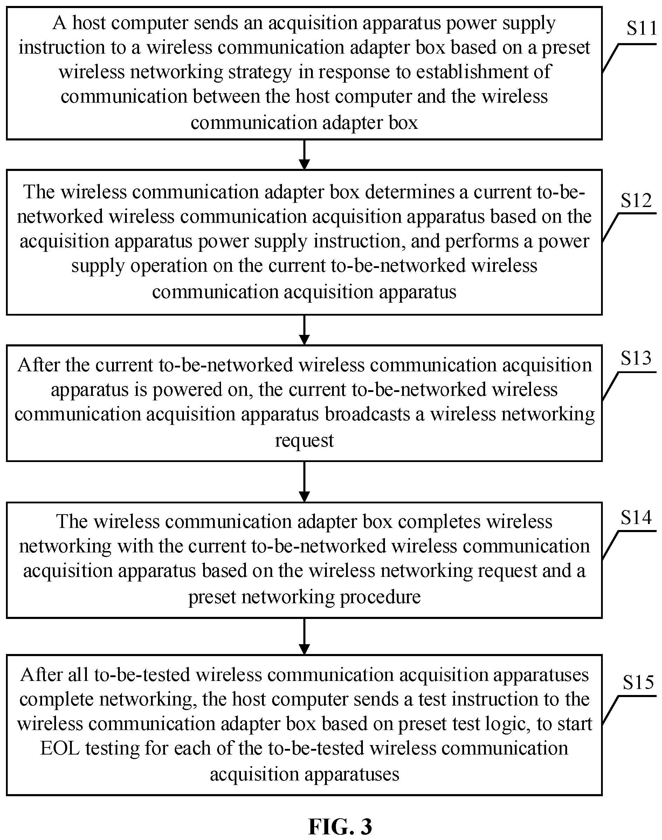

In an embodiment, as shown in FIG. 3, an EOL test method for wireless communication acquisition apparatuses is provided, applied to the foregoing EOL test system for wireless communication acquisition apparatuses and including the following steps.

S11: A host computer sends an acquisition apparatus power supply instruction to a wireless communication adapter box based on a preset wireless networking strategy in response to establishment of communication between the host computer and the wireless communication adapter box. The preset wireless networking strategy may be understood as including a networking sequence (power-on sequence) of to-be-tested wireless communication acquisition apparatuses, timeout duration of a networking request monitoring timer, a preset failure upper limit (maximum allowable quantity of networking failures), and another relevant networking parameter that are preset based on a test requirement. Relevant configuration needs to be completed on the host computer in advance. A specific configuration manner and selected values of relevant parameters are not specifically limited herein. Correspondingly, the acquisition apparatus power supply instruction includes a single identifier of a to-be-tested wireless communication acquisition apparatus. The single identifier of the to-be-tested wireless communication acquisition apparatus is used to indicate a to-be-tested wireless communication acquisition apparatus that the system currently allows the wireless communication adapter box to power on and network with. This may be understood as that the host computer ensures, through the acquisition apparatus power supply instruction based on the preset wireless networking strategy, that only one to-be-tested wireless communication acquisition apparatus serves as a current to-be-networked wireless communication acquisition apparatus in each round of networking of the system. This prevents excessive processing for the wireless communication adapter box to sense each wireless communication acquisition apparatus when simultaneously networking with a plurality of wireless communication acquisition apparatuses, to improve networking efficiency.

The preset test logic may be understood as function or performance test execution logic formulated based on an actual test requirement, specifically including voltage acquisition accuracy test logic, temperature acquisition accuracy test logic, balancing function test logic, single-cell acquisition channel leakage current test logic, and the like. Logic may be added or removed based on adjustment to test content in an actual scenario.

In practical application, after the host computer establishes a communication connection to the wireless communication adapter box and a required test environment is deployed, the preset wireless networking strategy, preset test logic, and another relevant parameter can be configured on the host computer, and an automatic test process including the following two stages can be started based on method steps below: automatic networking and test logic execution.

S12: The wireless communication adapter box determines a current to-be-networked wireless communication acquisition apparatus based on the acquisition apparatus power supply instruction, and performs a power supply operation on the current to-be-networked wireless communication acquisition apparatus. Specifically, that the wireless communication adapter box determines the current to-be-networked wireless communication acquisition apparatus and performs the power supply operation on the current to-be-networked wireless communication acquisition apparatus includes:
A main chip control unit of the wireless communication adapter box determines the current to-be-networked wireless communication acquisition apparatus based on the acquisition apparatus power supply instruction, generates a corresponding control instruction, and sends the control instruction to a power switch matrix unit of the wireless communication adapter box.

The power switch matrix unit performs the power supply operation on the current to-be-networked wireless communication acquisition apparatus based on the control instruction.

S13: After the current to-be-networked wireless communication acquisition apparatus is powered on, the current to-be-networked wireless communication acquisition apparatus broadcasts a wireless networking request. The wireless networking request includes MAC address information of the current to-be-networked wireless communication acquisition apparatus, and is used for the wireless communication adapter box to network and interact with the current to-be-networked wireless communication acquisition apparatus based on the MAC address information and a corresponding networking procedure.

S14: The wireless communication adapter box completes wireless networking with the current to-be-networked wireless communication acquisition apparatus based on the wireless networking request and a preset networking procedure. The preset networking procedure may be determined based on an actual application requirement, and is not specifically limited herein. Specifically, that the wireless communication adapter box completes wireless networking with the current to-be-networked wireless communication acquisition apparatus based on the wireless networking request and the preset networking procedure includes:

The main chip control unit of the wireless communication adapter box completes wireless networking with the current to-be-networked wireless communication acquisition apparatus based on the wireless networking request and the preset networking procedure. It should be noted that a specific networking process further requires a wireless communication transceiver unit to perform wireless data transceiving for information interaction between the wireless communication adapter box and each to-be-tested wireless communication acquisition apparatus. Specific transceived wireless data is related to an actual networking procedure, and is not specifically limited herein.

Correspondingly, after the main chip control unit of the wireless communication adapter box completes wireless networking with the current to-be-networked wireless communication acquisition apparatus, the method further includes:
The wireless communication adapter box sets a networking flag corresponding to the current to-be-networked wireless communication acquisition apparatus to networking success, generates corresponding networking success information based on the networking flag, and sends the networking success information to the host computer. The networking success information includes the networking flag and the MAC address information of the current to-be-networked wireless communication acquisition apparatus.

The host computer determines, based on the networking success information and the preset wireless networking strategy, whether all of the to-be-tested wireless communication acquisition apparatuses have completed networking; and after determining that the networking has not been completed, sends a next acquisition apparatus power supply instruction to the wireless communication adapter box based on the preset networking strategy.

S15: After all to-be-tested wireless communication acquisition apparatuses complete networking, the host computer sends a test instruction to the wireless communication adapter box based on the preset test logic, to start EOL testing for each of the to-be-tested wireless communication acquisition apparatuses.

In addition, in an actual networking scenario, an external factor such as network latency or interruption may cause a delay, loss, or the like of a wireless networking request or interaction information in a networking process. To avoid inefficient networking caused by such a factor, in this embodiment, preferably, a fault tolerance mechanism combining a time limit of a single networking process with an allowable quantity of networking times is used to ensure networking efficiency of the system while enabling each normally functioning to-be-tested wireless communication acquisition apparatus to successfully complete networking and testing as soon as possible. The method further includes:

In response to that the power switch matrix unit of the wireless communication adapter box supplies power to the current to-be-networked wireless communication acquisition apparatus, the networking request monitoring timer is started.

In response to that the networking request monitoring timer expires and the wireless communication adapter box receives no wireless networking request, the power switch matrix unit of the wireless communication adapter box performs a power-off operation on the current to-be-networked wireless communication acquisition apparatus, a networking flag corresponding to the current to-be-networked wireless communication acquisition apparatus is set to networking anomaly, and corresponding networking failure information is generated and sent to the host computer. The networking failure information includes the networking flag.

The host computer updates a corresponding apparatus networking failure count based on the networking failure information; determines whether an updated apparatus networking failure count exceeds a preset failure upper limit; and after determining that the updated apparatus networking failure count does not exceed the preset failure upper limit, resends the corresponding acquisition apparatus power supply instruction to the wireless communication adapter box.

It should be noted that the networking method provided in the present application is not limited to networking management of wireless communication acquisition apparatuses. Other products of a same type involving wireless communication can also use the foregoing method for efficient and rapid networking. For specific details regarding the EOL test method for wireless communication acquisition apparatuses, refer to the foregoing description of the EOL test system for wireless communication acquisition apparatuses. Corresponding technical effects can also be obtained equivalently. Details are not described herein again. In addition, although the steps in the foregoing flowchart are shown in sequence as indicated by the arrows, these steps are not necessarily performed in sequence as indicated by the arrows. The execution order of these steps is not strictly limited, and these steps may be executed in other orders, unless clearly described otherwise.

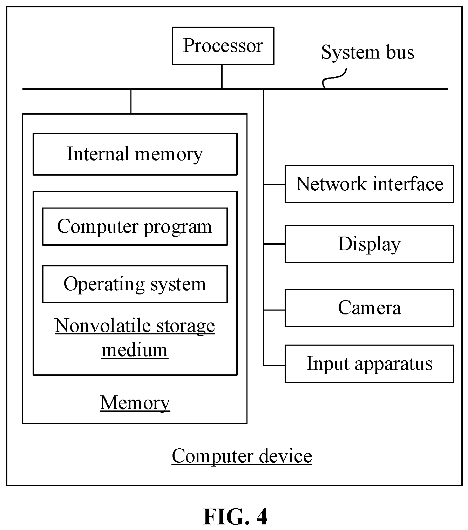

FIG. 4 is a diagram of an internal structure of a computer device according to an embodiment. The computer device may specifically be a terminal or a server. As shown in FIG. 4, the computer device includes a processor, a memory, a network interface, a display, a camera, and an input apparatus that are connected through a system bus. The processor of the computer device is configured to provide computing and control capabilities. The memory of the computer device includes a nonvolatile storage medium and an internal memory. The nonvolatile storage medium stores an operating system and a computer program. The internal memory provides an environment for operation of the operating system and the computer program in the nonvolatile storage medium. The network interface of the computer device is configured to communicate with an external terminal through a network connection. When the computer program is executed by the processor, an EOL test method for wireless communication acquisition apparatuses is implemented. The display of the computer device may be a liquid crystal display (LCD) or an e-ink display. The input apparatus of the computer device may be a touch layer covering the display, or a key, trackball, or touchpad disposed on a housing of the computer device, an external keyboard, touchpad, or mouse, or the like.

Those of ordinary skill in the art may understand that the structure shown in FIG. 4 is merely a block diagram of a partial structure related to the solution of the present application and does not constitute a limitation on the computer device to which the solution of the present application is applied. Specifically, the computer device may include more or fewer components than those shown in the figure, or some components may be combined, or a same component arrangement may be used.

In an embodiment, a computer device is provided, including a memory, a processor, and a computer program stored in the memory and runnable on the processor. The processor implements steps of the foregoing method when executing the computer program.

In an embodiment, a computer-readable storage medium is provided, storing a computer program. The computer program, when executed by a processor, implements steps of the foregoing method.

In summary, in the EOL test system and method for wireless communication acquisition apparatuses provided in the embodiments of the present application, the host computer sends the acquisition apparatus power supply instruction and the test instruction to the wireless communication adapter box based on the preset wireless networking strategy. The wireless communication adapter box controls the power-on sequence of the to-be-tested wireless communication acquisition apparatuses based on the acquisition apparatus power supply instruction. After the to-be-tested wireless communication acquisition apparatus is powered on, the to-be-tested wireless communication acquisition apparatus broadcasts the wireless networking request to network with the wireless communication adapter box. In response to that no wireless networking request is received within preset duration after the power supply operation is performed on the current to-be-networked wireless communication acquisition apparatus, the power-off operation is performed on the current to-be-networked wireless communication acquisition apparatus, the networking flag corresponding to the current to-be-networked wireless communication acquisition apparatus is set to networking anomaly, and the corresponding networking failure information is generated and sent to the host computer. After determining that the apparatus networking failure count does not exceed the preset failure upper limit, the host computer resends the corresponding acquisition apparatus power supply instruction to the wireless communication adapter box, until networking succeeds or the preset failure upper limit is reached. When the wireless communication adapter box establishes wireless networking with the current to-be-networked wireless communication acquisition apparatus, the networking flag corresponding to the current to-be-networked wireless communication acquisition apparatus is set to networking success, and the networking success information including the networking flag and the MAC address information of the current to-be-networked wireless communication acquisition apparatus is generated based on the networking flag and sent to the host computer. The host computer sends the next acquisition apparatus power supply instruction to the wireless communication adapter box based on the preset networking strategy, until all to-be-tested wireless communication acquisition apparatuses complete networking. Then, the host computer sends the test instruction to the wireless communication adapter box based on the preset test logic, to start EOL testing for each to-be-tested wireless communication acquisition apparatus. The foregoing technical solution effectively resolves application defects of an existing EOL test system for wireless communication acquisition apparatuses. It can effectively improve networking efficiency of the wireless communication acquisition apparatuses during EOL testing, and reliably ensure testing efficiency and product quality of the wireless communication acquisition apparatuses. It can also ensure EOL testing universality and flexibility, to avoid a safety problem and improve EOL testing efficiency. In this way, an actual application requirement of EOL testing is truly met.

The embodiments in this specification are described in a progressive manner. For same or similar parts between embodiments, reference may be made to each other. Each embodiment focuses on a difference from other embodiments. In particular, for a system embodiment, since it is basically similar to the method embodiment, the description is relatively simple, and reference can be made to the description of the method embodiment. It should be noted that the technical characteristics of the foregoing embodiments can be employed in arbitrary combinations. To provide a concise description of these embodiments, all possible combinations of all the technical characteristics of the foregoing embodiments may not be described; however, these combinations of the technical characteristics should be construed as falling within the scope defined by this specification as long as no contradiction occurs.

The foregoing embodiments are merely illustrative of several preferred implementations of the present application, and the description thereof is more specific and detailed, but is not to be construed as a limitation to the patentable scope of the present application. It should be noted that several improvements and replacements may further be made by those of ordinary skill in the art without departing from the technical principle of the present application, and such improvements and replacements should also be deemed as falling within the protection scope of the present application. Therefore, the protection scope of the present application should be subject to the protection scope of the claims.

## Claims

1. An end-of-line (EOL) test system for wireless communication acquisition apparatuses, comprising a host computer, a wireless communication adapter box, and a plurality of to-be-tested wireless communication acquisition apparatuses; wherein
the host computer is configured to send an acquisition apparatus power supply instruction and a test instruction to the wireless communication adapter box based on a preset wireless networking strategy and preset test logic;
the wireless communication adapter box is configured to control a power-on sequence of the to-be-tested wireless communication acquisition apparatuses based on the acquisition apparatus power supply instruction; and after networking with all of the to-be-tested wireless communication acquisition apparatuses, control the to-be-tested wireless communication acquisition apparatuses to complete EOL testing of all of the to-be-tested wireless communication acquisition apparatuses based on the test instruction; and
the to-be-tested wireless communication acquisition apparatus is configured to: after being powered on, broadcast a wireless networking request to network with the wireless communication adapter box; and after completing networking, perform EOL testing based on the preset test logic and the test instruction received by the wireless communication adapter box.

2. The EOL test system for wireless communication acquisition apparatuses according to claim 1, wherein the preset test logic comprises voltage acquisition accuracy test logic, temperature acquisition accuracy test logic, balancing function test logic, and single-cell acquisition channel leakage current test logic.

3. The EOL test system for wireless communication acquisition apparatuses according to claim 1, wherein the wireless communication adapter box comprises a controller area network (CAN) communication conversion unit, a main chip control unit, a power switch matrix unit, a wireless communication transceiver unit, and a system power management unit;
the CAN communication conversion unit is configured to implement communication interaction between the host computer and the main chip control unit, and receive the acquisition apparatus power supply instruction and the test instruction that are sent by the host computer;
the main chip control unit is configured to determine a current to-be-networked wireless communication acquisition apparatus based on the acquisition apparatus power supply instruction, generate a corresponding control instruction, and send the control instruction to the power switch matrix unit; and is further configured to complete wireless networking with the current to-be-networked wireless communication acquisition apparatus based on a preset networking procedure and a wireless networking request broadcast by the current to-be-networked wireless communication acquisition apparatus;
the power switch matrix unit is configured to perform a power supply operation on the current to-be-networked wireless communication acquisition apparatus based on the control instruction from the main chip control unit;
the wireless communication transceiver unit is configured to perform wireless data transceiving for wireless networking and information interaction between the wireless communication adapter box and each of the to-be-tested wireless communication acquisition apparatuses; and
the system power management unit is configured to supply power to the CAN communication conversion unit, the main chip control unit, the power switch matrix unit, and the wireless communication transceiver unit.

4. The EOL test system for wireless communication acquisition apparatuses according to claim 3, wherein the wireless communication adapter box is further configured to: after the wireless communication adapter box establishes wireless networking with the current to-be-networked wireless communication acquisition apparatus, set a networking flag corresponding to the current to-be-networked wireless communication acquisition apparatus to networking success, generate corresponding networking success information based on the networking flag, and send the networking success information to the host computer, wherein the networking success information comprises the networking flag and media access control (MAC) address information of the current to-be-networked wireless communication acquisition apparatus; and
the host computer is further configured to determine, based on the networking success information and the preset wireless networking strategy, whether all of the to-be-tested wireless communication acquisition apparatuses have completed networking; and after determining that the networking has not been completed, send a next acquisition apparatus power supply instruction to the wireless communication adapter box based on the preset networking strategy.

5. The EOL test system for wireless communication acquisition apparatuses according to claim 3, wherein the wireless communication adapter box is further configured to: in response to the power supply operation on the current to-be-networked wireless communication acquisition apparatus, start a networking request monitoring timer; and in response to that the networking request monitoring timer expires and no wireless networking request is received, perform a power-off operation on the current to-be-networked wireless communication acquisition apparatus, set a networking flag corresponding to the current to-be-networked wireless communication acquisition apparatus to networking anomaly, generate corresponding networking failure information, and send the networking failure information to the host computer, wherein the networking failure information comprises the networking flag; and
the host computer is further configured to update a corresponding apparatus networking failure count based on the networking failure information; determine whether an updated apparatus networking failure count exceeds a preset failure upper limit; and after determining that the updated apparatus networking failure count does not exceed the preset failure upper limit, resend the corresponding acquisition apparatus power supply instruction to the wireless communication adapter box.

6. An EOL test method for wireless communication acquisition apparatuses, applied to the EOL test system for wireless communication acquisition apparatuses according to claim 1 and comprising the following steps:
sending, by a host computer, an acquisition apparatus power supply instruction to a wireless communication adapter box based on a preset wireless networking strategy in response to establishment of communication between the host computer and the wireless communication adapter box, wherein the acquisition apparatus power supply instruction comprises a single identifier of a to-be-tested wireless communication acquisition apparatus;
determining, by the wireless communication adapter box, a current to-be-networked wireless communication acquisition apparatus based on the acquisition apparatus power supply instruction, and performing a power supply operation on the current to-be-networked wireless communication acquisition apparatus;
after the current to-be-networked wireless communication acquisition apparatus is powered on, broadcasting, by the current to-be-networked wireless communication acquisition apparatus, a wireless networking request, wherein the wireless networking request comprises media access control (MAC) address information of the current to-be-networked wireless communication acquisition apparatus;
completing, by the wireless communication adapter box, wireless networking with the current to-be-networked wireless communication acquisition apparatus based on the wireless networking request and a preset networking procedure; and
after all to-be-tested wireless communication acquisition apparatuses complete networking, sending, by the host computer, a test instruction to the wireless communication adapter box based on preset test logic, to start EOL testing for each of the to-be-tested wireless communication acquisition apparatuses.

7. The EOL test method for wireless communication acquisition apparatuses according to claim 6, wherein the determining, by the wireless communication adapter box, a current to-be-networked wireless communication acquisition apparatus, and performing a power supply operation on the current to-be-networked wireless communication acquisition apparatus comprises:
determining, by a main chip control unit of the wireless communication adapter box, the current to-be-networked wireless communication acquisition apparatus based on the acquisition apparatus power supply instruction, generating a corresponding control instruction, and sending the control instruction to a power switch matrix unit of the wireless communication adapter box; and
performing, by the power switch matrix unit, the power supply operation on the current to-be-networked wireless communication acquisition apparatus based on the control instruction.

8. The EOL test method for wireless communication acquisition apparatuses according to claim 7, wherein the completing, by the wireless communication adapter box, wireless networking with the current to-be-networked wireless communication acquisition apparatus based on the wireless networking request and a preset networking procedure comprises:
completing, by the main chip control unit of the wireless communication adapter box, wireless networking with the current to-be-networked wireless communication acquisition apparatus based on the wireless networking request and the preset networking procedure.

9. The EOL test method for wireless communication acquisition apparatuses according to claim 8, after the completing, by the main chip control unit of the wireless communication adapter box, wireless networking with the current to-be-networked wireless communication acquisition apparatus, further comprising:
setting, by the wireless communication adapter box, a networking flag corresponding to the current to-be-networked wireless communication acquisition apparatus to networking success, generating corresponding networking success information based on the networking flag, and sending the networking success information to the host computer, wherein the networking success information comprises the networking flag and the MAC address information of the current to-be-networked wireless communication acquisition apparatus; and
determining, by the host computer based on the networking success information and the preset wireless networking strategy, whether all of the to-be-tested wireless communication acquisition apparatuses have completed networking; and after determining that the networking has not been completed, sending a next acquisition apparatus power supply instruction to the wireless communication adapter box based on the preset networking strategy.

10. The EOL test method for wireless communication acquisition apparatuses according to claim 9, further comprising:
in response to that the power switch matrix unit of the wireless communication adapter box supplies power to the current to-be-networked wireless communication acquisition apparatus, starting a networking request monitoring timer;
in response to that the networking request monitoring timer expires and the wireless communication adapter box receives no wireless networking request, performing, by the power switch matrix unit of the wireless communication adapter box, a power-off operation on the current to-be-networked wireless communication acquisition apparatus, setting a networking flag corresponding to the current to-be-networked wireless communication acquisition apparatus to networking anomaly, generating corresponding networking failure information, and sending the networking failure information to the host computer, wherein the networking failure information comprises the networking flag; and
updating, by the host computer, a corresponding apparatus networking failure count based on the networking failure information; determining whether an updated apparatus networking failure count exceeds a preset failure upper limit; and after determining that the updated apparatus networking failure count does not exceed the preset failure upper limit, resending the corresponding acquisition apparatus power supply instruction to the wireless communication adapter box.
